# DEMANDE DE BREVET EUROPEEN

(11) **EP 0 570 278 A1**
(43) Date de publication de la demande: **18.11.1993**
(21) Numéro de dépôt: 93401208.9
(22) Date de dépôt: 12.05.1993
(51) Int. Cl.: B60Q 1/26, B60Q 1/30

(54) **Dispositif catadioptrique et dispositif optique l'incorporant pour un véhicule**

(30) Priorité: 12.05.1992 FR 9205725
(71) Demandeur: VALEO VISION, 93000 Bobigny (FR)
(72) Inventeur: Rives, Claude, F-27930 Evreux (FR); Guyomard, Jean Nicolas, F-27930 le Mesnil Fuguet (FR)
(74) Mandataire: Martin, Jean-Jacques

(57) **Abrégé**

Un dispositif catadioptrique destiné à être incorporé à un dispositif optique de signalisation, caractérisé en ce qu'il comprend une plaque catadioptrique (30), une contre-plaque (40) de protection de la plaque catadioptrique, la plaque catadioptrique et la contre-plaque étant assemblées l'une avec l'autre de façon étanche à leur périphérie, le dispositif étant apte à être ensuite rapporté contre la face intérieure d'un voyant lisse (20) du dispositif optique, en ce que la plaque catadioptrique (30) et la contre-plaque (40) comprennent des moyens périphériques de calage mutuel (31, 41) destinés à définir entre elles un volume d'air réduit (V), et comprenant, sur la plaque catadioptrique et sur la contre-plaque, des rebords respectifs (31, 41) de section en forme générale de "L", par lesquels ladite plaque et ladite contre-plaque sont en outre assemblées de façon étanche.

## Description

La présente invention a trait d'une façon générale aux dispositifs de signalisation de véhicules automobiles, et notamment aux dispositifs de signalisation passive à rétro-réflexion catadioptrique.

Un catadioptre est classiquement constitue par un ensemble d'aiguilles cadatrioptriques ayant une face d'entrée droite et un fond définissant un trièdre trirectangle assurant, par réflexion totale, le renvoi du rayonnement incident. Les aiguilles sont définies par une plaque catadioptrique dont la face arrière, comportant les trièdres, est protégée par une contre-plaque de protection. On évite ainsi que des poussières ou salissures ne viennent s'accumuler sur les faces du trièdre, ce qui diminuerait considérablement le coefficient de rétroréflexion.

Une façon classique d'installer un catadioptre dans un bloc de feux de signalisation arrière de véhicule consiste à prévoir une zone du voyant du bloc de feux qui est en renfoncement d'une distance appropriée par rapport au plan général du voyant. La plaque catadioptrique est rapportée et fixée sur ce renfoncement, par exemple par ultrasons. La partie en renfoncement du voyant tient lieu de cette manière de contre-plaque de protection.

Une difficulté de ce genre de construction réside cependant en ce que le positionnement de la plaque catadioptrique dans une relation d'affleurement avec les parties avoisinantes du voyant, nécessaire pour des raisons évidentes de style, est délicat à réaliser. Et ce problème est encore plus aigu lorsque la plaque catadioptrique présente une forme galbée.

Par ailleurs, ce type de montage connu laisse entre la plaque catadioptrique et sa contre-plaque un volume d'air relativement important, fermé de façon étanche. Et des écarts importants de température créent sur ces deux éléments des contraintes qui peuvent conduire à leur déformation. Cette déformation conduit elle-même à une altération des propriétés de rétroréflexion catadioptrique du fait que les diverses aiguilles catadioptriques peuvent ne plus présenter l'orientation correcte.

De plus, dans un tel dispositif catadioptrique classique, la coloration de la lumière rétroréfléchie (le plus souvent de couleur rouge, imposée par les règlements), est obtenue en teintant la plaque catadioptrique avec cette même couleur. Ceci conduit inévitablement à abaisser le rendement de rétro-réflexion.

Un autre montage connu de catadioptre est décrit dans le document FR-A-2 492 948. Une plaque catadioptrique est montée en arrière d'une partie du voyant spécialement conçue (lisse sur ses deux faces). La contre-plaque de protection est définie par une partie du socle du bloc de feux. Dans ce cas, la plaque catadioptrique est disposée dans une cavité étanche obtenue en soudant périphériquement le voyant et le socle.

Cette construction est cependant complexe et onéreuse. En outre l'espace d'air fermé de façon étanche est là encore important, avec les risques précités.

La présente invention vise à pallier ces inconvénients de la technique antérieure.

Elle concerne à cet effet un dispositif catadioptrique destiné à être incorporé à un dispositif optique de signalisation, caractérisé en ce qu'il comprend une plaque catadioptrique, une contre-plaque de protection de la plaque catadioptrique, la plaque catadioptrique et la contre-plaque étant assemblées l'une avec l'autre de façon étanche à leur périphérie, le dispositif étant apte à être ensuite rapporté contre la face intérieure d'un voyant lisse du dispositif optique, en ce que la plaque catadioptrique et la contre-plaque comprennent des moyens périphériques de calage mutuel destinés à définir entre elles un volume d'air réduit (V) et comprenant, sur la plaque catadioptrique et sur la contre-plaque, des rebords respectifs de section en forme générale de "L", par lesquels ladite plaque et ladite contre-plaque sont en outre assemblées de façon étanche.

On observera ici que les moyens périphériques de calage mutuel ne s'étendent pas nécessairement sur toute la périphérie de la plaque et de la contre-plaque.

Il est proposé également un dispositif optique pour véhicule automobile, caractérisé en ce qu'il comprend un voyant dont au moins une zone est lisse sur ses deux faces et un dispositif catadioptrique tel que défini ci-dessus.

Il est avantageux que ladite zone du voyant soit teintée et que ladite plaque catadioptrique du dispositif catadioptrique soit incolore.

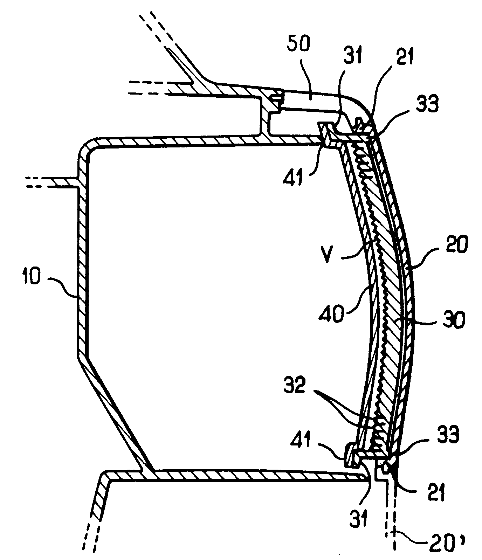

D'autres aspects, buts et avantages de la présente invention apparaîtront mieux à la lecture de la description détaillée suivante d'un mode de réalisation préférée de celle-ci, donnée à titre d'exemple et faite en référence au dessin annexé, sur lequel la figure unique est une vue en coupe verticale d'une partie d'un bloc de feux de signalisation arrière équipé d'un dispositif catadioptrique selon l'invention.

On peut observer sur la figure unique un socle 10 fermé à son extrémité tournée vers l'extérieur par un voyant 20. Le voyant 20 est lisse sur ses deux faces et comporte un rebord périphérique rentrant 21, par lequel il est fixé aux parties avoisinantes du bloc de feux (enjoliveur 50 en haut, autre partie 20' du voyant en bas).

Selon l'aspect essentiel de l'invention, le dispositif catadioptrique est réalisé par pré-montage d'une plaque catadioptrique 30 et de sa contre-plaque 40, ces deux pièces étant réunies périphériquement l'une à l'autre de façon étanche, par exemple par soudage aux ultrasons. Les aiguilles catadioptriques de la plaque 30 sont désignées par la référence 32.

On observe sur la figure que la plaque catadioptrique 30 et sa contre-plaque 40 possèdent chacune un rebord périphérique, respectivement 31 et 41, de section en forme générale de "L" dirigée vers l'intérieur du bloc de feux (vers la gauche sur la figure) puis latéralement vers l'extérieur.

Ces deux rebords en "L" coopèrent pour effectuer un calage mutuel de la plaque 30 et de sa contre-plaque 40 à la fois dans le sens de la profondeur et latéralement. Le pré-montage des pièces 30 et 40, conjointement avec les moyens de calage mutuel précités ou tout autre moyen de calage équivalent, permet de définir entre la plaque 30 et la contre-plaque un volume étanche V qui peut être extrêmement réduit, pour ainsi minimiser les effets discutés plus haut en présence de chocs thermiques.

L'ensemble prémonté constitué par la plaque catadioptrique 30 et sa contre-plaque 40 est fixé sur le voyant homologue 20 du bloc de feux par l'intérieur, la plaque 30 étant dimensionnée dans sa région extérieure de façon à venir se loger étroitement entre les rebords 21 dudit voyant 20.

On observe également que la plaque catadioptrique 30 possède à sa périphérie une nervure 33 dirigée vers l'extérieur et destinée à venir s'appuyer contre la face intérieure du voyant 20, de manière à définir entre la plaque 30 et le voyant un espace nécessaire pour éviter toute anomalie optique. Cet espace n'est pas nécessairement étanche, ce qui obvie les problèmes de dilatation.

De façon préférée, le voyant 20 est teinté en rouge, tandis que la plaque catadioptrique 30 est réalisée en matière plastique transparente et incolore. On donne de cette manière à la plaque 30 un rendement de rétroréflexion catadioptrique supérieur à celui d'une plaque catadioptrique teintée usuelle.

Bien entendu, la présente invention n'est nullement limitée à la forme de réalisation décrite ci-dessus et représentée sur les dessins, mais l'homme de l'art saura y apporter toute variante ou modification conforme à son esprit.

## Revendications

1. Dispositif catadioptrique destiné à être incorporé à un dispositif optique de signalisation, caractérisé en ce qu'il comprend une plaque catadioptrique (30), une contre-plaque (40) de protection de la plaque catadioptrique, la plaque catadioptrique et la contre-plaque étant assemblées l'une avec l'autre de façon étanche à leur périphérie, le dispositif étant apte à être ensuite rapporté contre la face intérieure d'un voyant lisse (20) du dispositif optique, en ce que la plaque catadioptrique (30) et la contre-plaque (40) comprennent des moyens périphériques de calage mutuel (31, 41) destinés à définir entre elles un volume d'air réduit (V) et comprenant, sur la plaque catadioptrique et sur la contre-plaque, des rebords respectifs (31, 41) de section en forme générale de "L", par lesquels ladite plaque et ladite contre-plaque sont en outre assemblées de façon étanche.

2. Dispositif optique pour véhicule automobile, caractérisé en ce qu'il comprend un voyant (20) dont au moins une zone est lisse sur ses deux faces et un dispositif catadioptrique (30, 40) selon la revendication 1.

3. Dispositif optique selon la revendication 2, caractérisé en ce que ladite zone du voyant (20) est teintée et en ce que ladite plaque catadioptrique (30) du dispositif catadioptrique est incolore.

4. Dispositif optique selon l'une des revendications 2 et 3, caractérisé en ce que ladite zone de voyant (20) comporte un rebord rentrant de fixation (21) et en ce que le dispositif catadioptrique se loge étroitement à l'intérieur dudit rebord.
